# EUROPÄISCHE PATENTSCHRIFT

(11) **EP 0 825 384 B1**
(45) Veröffentlichungstag und Bekanntmachung des Hinweises auf die Patenterteilung: **26.02.2003**
(21) Anmeldenummer: 97113504.1
(22) Anmeldetag: 05.08.1997
(51) Int. Cl.: F23L 7/00, F23C 7/06, F23L 15/04, C03B 5/235, F27B 3/22

(54) **Verringerung des NOx-Gehaltes**
Reduction of NOx content
Réduction de la teneur en NOx

(30) Priorität: 23.08.1996 DE 19634182
(43) Veröffentlichungstag der Anmeldung: 25.02.1998
(73) Patentinhaber: F.X. Nachtmann Bleikristallwerke GmbH, 92660 Neustadt a. d. Waldnaab (DE)
(72) Erfinder: Frank, Walter, Dipl.-Ing., 92660 Neustadt/Waldn. (DE); Schmidt, Ferdinand, Dipl.-Ing., 92721 Störnstein (DE)
(74) Vertreter: Böhm, Brigitte, Dipl.-Chem. Dr.

(56) Entgegenhaltungen:
- EP-A- 0 125 184
- EP-A- 0 601 274
- EP-A- 0 643 019
- EP-A- 0 657 689
- FR-A- 2 728 254
- US-A- 3 954 433

## Beschreibung

Die vorliegende Erfindung betrifft ein Verfahren zur Reduzierung der Menge an freiwerdendem NOₓ bei der Oberflächenbeheizung in Schmelz- oder Brennöfen mittels Gasbrennern, welche mit Heizgas, Luft oder/und Sauerstoff betrieben werden. Insbesondere betrifft die Erfindung dabei ein Verfahren, bei dem die Oberfläche einer Glasschmelze in einem Glasschmelzofen beheizt wird und das Gemenge gegebenenfalls Nitrat enthält. Ein derartiges Verfahren ist nach der EP-A-643 019 bekannt.

Bei der Herstellung von Glas, vor allem bei der Herstellung von Bleikristall (PbO)-Glas kommt es sehr oft zu einem hohen Ausstoß von Stickoxiden. Diese entstehen zum einen bei der Verbrennung von Luftstickstoff bei der Oberflächenbeheizung in Gasschmelzöfen mittels Gasbrennern und zum anderen werden Stickoxide aus den Rohstoffen bei der chemischen Umwandlung zu Glas frei. Ganz allgemein verläuft die Herstellung einer Glas-schmelze dadurch, daß aus Vorratssilos Scherben (Rückfluß von Ausschuß usw.) und Gemenge (Rohstoffe, die noch nicht an der Glasbildung teilgenommen haben) mittels geeigneter Vorrichtungen in den eigentlichen Schmelzraum eines Glasschmelzofens kontinuierlich eingebracht werden. Nach der Anlaufphase des Ofens, die für die vorliegende Erfindung keine weitere Bedeutung hat, befindet sich dort in der Schmelzwanne ein flüssiges Glasbad, das direkt elektrisch und zur Leistungssteigerung des Ofens zusätzlich fossil von der Oberfläche mit Brennern beheizt wird. Dabei wird vorzugsweise die Verbrennungsluft z.B. mit Rekuperatoren mit Hilfe der Abgase vorgewärmt. In der Schmelzwanne selber bildet sich nach kurzer Zeit eine Schichtung aus. Angeschmolzene Scherben und Rohstoffe schwimmen als schaumige Masse an der Oberfläche, werden an der Unterseite durch den Elektrodenstrom aufgeheizt und sinken bedingt durch ständige Glasentnahme über ein Glasverteilungssystem langsam in die heißeste Zone zwischen den Elektroden ab. Dort findet die Glasbildung (chemische Reaktion), die chemische Homogenisierung und die Läuterung (Entgasung) statt. Im darunterliegenden Bereich vor dem Abzug in das Glasverteilungssystem kühlt die Schmelze etwas ab, homogenisiert und entgast vollständig zu verarbeitungsgerechtem Glas. Ein Nachteil ist hierbei jedoch, daß sowohl durch die Oberflächenheizung mittels Brennern als auch durch Zufuhr von nitrathaltigem Gemenge Stickoxide beim Glasschmelzprozeß gebildet werden, für deren Ausstoß aus Glasherstellungsanlagen Grenzwerte existieren. Sowohl aus ökonomischer als auch aus ökologischer Sicht besteht daher Bedarf nach einer Möglichkeit, den NOₓ-Ausstoß bei der Glasherstellung, jedoch auch bei der Herstellung anderer Schmelzen in Schmelzöfen, welche zumindest teilweise mit Gasbrennern beheizt werden, zu verringern.

Aufgabe der vorliegenden Erfindung war es, ein derartiges Verfahren bereitzustellen.

Diese Aufgabe wird gelöst durch ein Verfahren zur Reduzierung der Menge an freiwerdendem NOₓ in Schmelz- oder Brennöfen in welchen für die Oberflächenheizung einer Glasschmelze, Gasbrenner, welche mit Heizgas, Luft oder/und Sauerstoff betrieben werden, eingesetzt werden, wobei man erfindungsgemäß dem Gasbrenner ein Gemisch aus Heizgas und Luft zuführt und den Sauerstoff separat unterhalb des Gasbrennerns einbringt.

Überraschenderweise wurde festgestellt, daß bei dieser Vorgehensweise, bei der der Sauerstoff nicht direkt in die Flamme miteingeblasen wird, sondern etwas benachbart von der Flamme und unterhalb der Gasbrennerflamme zugeführt wird, praktisch keine Stickoxidbildung festgestellt wurde, obgleich bei der bisher bekannten Vorgehensweise, bei der Sauerstoff und Luft zusammen und mit dem Gas in die Flamme eingeführt wurden, erhebliche Mengen an Stickoxiden gebildet wurden. In Schmelz- und Brennöfen ist es mit dem erfindungsgemäßen Verfahren daher möglich, bereits bei der Beheizung erhebliche Mengen an Stickoxidabgas zu vermeiden, um somit erheblich größere Kapazitäten oder/und eine erheblich geringere Belastung der Umwelt nutzen zu können.

Im Rahmen der Erfindung ist es bevorzugt, die in den Gasbrenner eingeführte Luft auf eine Temperatur von 250 bis 450°C vorzuwärmen, bevor diese mit dem Heizgas vermischt wird und im Gasbrenner in die Flamme eingeführt wird.

Es ist für das erfindungsgemäße Verfahren darüber hinaus besonders bevorzugt, Luft und Sauerstoff so zuzudosieren, daß ein Sauerstoffgehalt der Verbrennungsluft von insgesamt 25 bis 40 % erhalten wird.

Das erfindungsgemäße Verfahren ist besonders vorteilhaft anwendbar für die Erwärmung von Glasschmelzen in einem Glasschmelzofen. Wie bereits oben ausgeführt, werden hierbei Scherben und Gemenge oben auf die in einer Schmelzwanne vorliegende geschmolzene Glasschicht aufgebracht und durch den oder die Gasbrenner zumindest teilweise geschmolzen.

Bei der Herstellung vieler Gläser werden Rohmaterialien verwendet, die Nitrat enthalten. Beim erfindungsgemäßen Verfahren hat sich überraschenderweise herausgestellt, daß nicht nur praktisch keine Stickoxide freigesetzt werden durch den Gasbrenner, sondern es sogar ermöglicht wird, die gemäß stöchiometrischer Berechnung freiwerdenden Stickoxide aus dem Nitrat teilweise zu eliminieren. Durch Versuchsergebnisse konnte gezeigt werden, daß trotz der insgesamt oxidierenden Ofenatmosphäre also nicht nur kaum Stickoxid in der Flamme gebildet wird, sondern offensichtlich sogar bei der chemischen Umwandlung des Salpeters oder anderer Nitratquellen gebildete Stickoxide zu Stickstoff reduziert wurden. Somit ermöglicht es das erfindungsgemäße Verfahren bei der Herstellung von Gläsern, denen nitrathaltige Rohstoffe zugesetzt werden, in ganz beträchtlicher weise die NOₓ-Bildung im Schmelzofen zu reduzieren, was möglicherweise dadurch geschieht, daß die Flamme beim erfindungsgemäßen Vorgehen reduzierend wirkt. Die beiden separaten Effekte der Vermeidung von NOₓ-Bildung sowohl im Brenner als auch aus der Glasschmelze selbst addieren sich bei der Herstellung solcher Gläser und haben insgesamt einen sehr vorteilhaften Effekt auf die Wirtschaftlichkeit und Umweltverträglichkeit des Glasherstellungsprozesses.

Neben der Glasschmelze sind jedoch auch andere Einsatzmöglichkeiten für das erfindungsgemäße Verfahren denkbar, wie z.B. Metallschmelzen, Alurecycling etc.

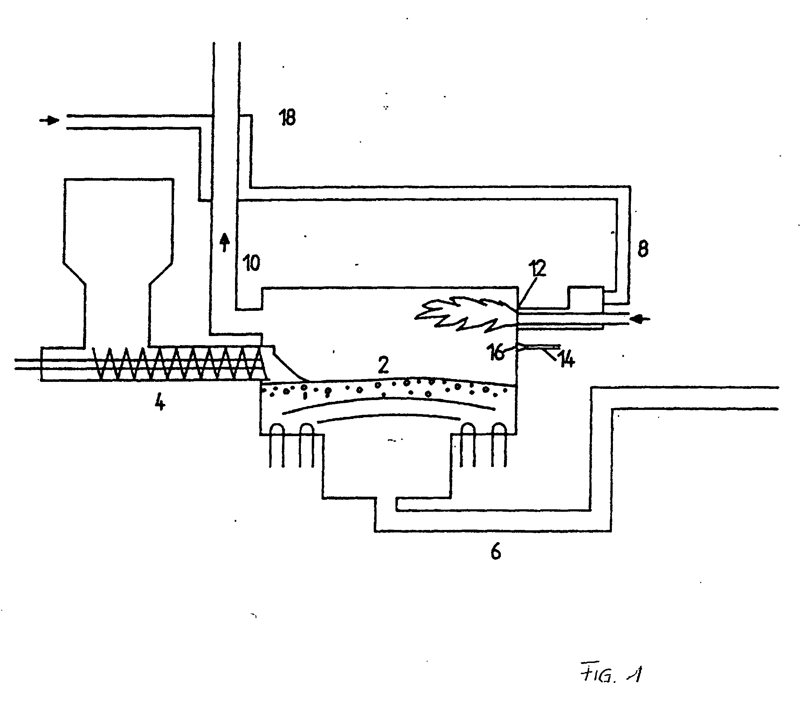

Der Schmelzofen zur Durchführung des erfindungsgemäßen Verfahrens ermöglicht die Reduzierung der Menge an freiwerdenden Stickoxiden. Ein derartiger Schmelzofen ist in der beigefügten Figur 1 abgebildet. Die grundsätzliche Arbeitsweise eines solchen Schmelzofens sei im folgenden am Beispiel eines Glasschmelzofens dargelegt: Aus Vorratssilos werden Scherben (Rückfluß von Ausschuß usw.) und Gemenge (Rohstoffe, die nicht an der Glasbildung teilgenommen haben) mittels einer Zuführvorrichtung 4, welche zum Beispiel eine Schnecke darstellt, in den eigentlichen Schmelzraum 2 kontinuierlich eingebracht. Nach der Anlaufphase des Ofens befindet sich dort ein flüssiges Glasbad im Schmelzraum 2, das direkt elektrisch und zur Leistungssteigerung des Ofens zusätzlich fossil von der Oberfläche mit einem oder mehreren Brennern 8 beheizt wird. Dabei wird die Verbrennungsluft vorzugsweise vorgeheizt, z.B. mit Rekuperatoren mit Hilfe der Abgase, also im Wärmeaustausch mit der Abgasableitung 10. Im Schmelzraum 2 selbst bildet sich nach kurzer Zeit eine Schichtung aus. Eingeschmolzene Scherben und Rohstoffe schwimmen als schaumige Masse an der Oberfläche, werden an der Unterseite durch den Elektrodenstrom aufgeheizt und sinken bedingt durch ständige Glasentnahme über die Entnahmevorrichtung 6 langsam in die heißeste Zone zwischen den Elektroden ab. Dort findet die Glasbildung statt.

Die Düseneinrichtung 12 des Schmelzofens ist eine Anordnung von konzentrischen Düsen für die getrennte Zufuhr von Heizgas und Luft. Für Versuchszwecke kann in einem im Zentrum liegenden zusätzlichen Rohr Sauerstoff zugegeben werden. Eine oder mehrere Sauerstoffzufuhrdüse(n) 16 ist (sind) unterhalb der Düseneinrichtung 12 angeordnet. In einer bevorzugten Ausführungsform sind Mittel 18 zur Erwärmung der Luft vor Zufuhr zu der Düseneinrichtung 12 vorgesehen. Diese Mittel 18 stehen in Wärmeaustausch mit der Abgasableitung 10.

Die folgenden Beispiele sollen in Verbindung mit der Figur die Erfindung näher erläutern.

### Beispiel

In einer ersten Meßreihe (Tabelle I, 1, 3, 5, 7) wurden in einem üblichen Glasschmelzofen mit den in den Tabellen gezeigten Bedingungen reine Scherben erschmolzen (Ausschluß von NOₓ aus Salpeter) und dabei der Sauerstoffgehalt der Luft schrittweise erhöht. Dabei werden zwei gegenläufige Mechanismen wirksam: Einerseits wird die Flamme heißer, was zu vermehrter Oxidation von Stickstoff führt andererseits muß weniger Ballast in Form von Stickstoff erwärmt werden, bei steigender Konzentration fällt deshalb die Massenfracht an NOₓ ab 30 % Sauerstoffzumischung ab.

In einer zweiten Meßreihe (9, 11, 13, 15) wurde auf die Luftvorwärmung verzichtet. Auch dabei wurde ein starker Anstieg der Stickoxidkonzentration festgestellt. Die Massenfracht stieg anfangs an und blieb dann etwa konstant.

Bei all den vorgenannten Messungen wurde der zusätzliche Sauerstoff durch je ein Rohr im Zentrum der beiden Brenner eingedüst. Da für annähernd stöchiometrische Verbrennung für einen Sauerstoffgehalt der Verbrennungsluft von ca.
25 % für 10 m³ Erdgas H ca. 80 m³ Luft und 4,2 m³ Sauerstoff, bei
30 % für 10 m³ Erdgas H ca. 60 m³ Luft und 8,4 m³ Sauerstoff, und bei
35 % für 10 m³ Erdgas H ca. 50 m³ Luft und 10,5 m³ Sauerstoff
benötigt werden, ergeben sich bei einem Düsendurchmesser der beiden Düsen von 6 mm Ausströmgeschwindigkeiten von ca.

| | |
|---|---|
| 50 m/s | für 25 % Sauerstoff (lfd. Nr. 3) |
| 130 m/s | für 30 % Sauerstoff (lfd. Nr. 5) |
| 110 m/s | für 35 % Sauerstoff (lfd. Nr. 7) |

| | |
|---|---|
| 40 m/s | für 25 % Sauerstoff (lfd. Nr. 11) |
| 80 m/s | für 30 % Sauerstoff (lfd. Nr. 13) |
| 100 m/s | für 35 % Sauerstoff (lfd. Nr. 15) |

Für zwei weitere Messungen (Tabelle II: 18, 19) wurde die Sauerstoffeindüsung auf 6 Rohre umgestellt, die 250 mm unter den Brennern angeordnet sind. Die Ausströmgeschwindigkeit betrug dabei bei einem Düsendurchmesser von 4,5 mm ca.

| | |
|---|---|
| 50 m/s | für 30 % Sauerstoff (lfd. Nr. 18) |
| 65 m/s | für 35 % Sauerstoff (lfd. Nr. 19). |

Überraschenderweise wurde dabei annähernd keine Stickoxidbildung festgestellt.

Anschließend wurden dem Schmelzofen unter sonst gleichen Betriebsbedingungen Rohstoffe im Verhältnis 70 % Scherben und 30 % Gemenge zugeführt. Der Sauerstoff wurde für die abschließenden Messungen (Tabelle II: 25, 26) ebenfalls über die Düseneinrichtung 16 eingebracht. Die Sauerstoffaustrittsgeschwindigkeiten betrugen dabei ca.

| | |
|---|---|
| 80 m/s | für 30 % Sauerstoff (lfd. Nr. 25) |
| 90 m/s | für 35 % Sauerstoff (lfd. Nr. 26). |

Bei einer Tonage von 20 t/d und einem Scherben/Gemengeverhältnis von 70/30 ergibt sich bei 2 kg NaNO₃/179,5 kg Gemenge und 1,08 kg No₂/2 kg NaNO₃ ein NO₂-Eintrag in das Schmelzbecken von 36,1 kg/d oder 1500 g/h, der sich normalerweise wieder finden müßte. Gemessen wurden jedoch 245,6 g/h bei 30 % O₂ bzw. 348,3 g/h bei 35 % O₂.

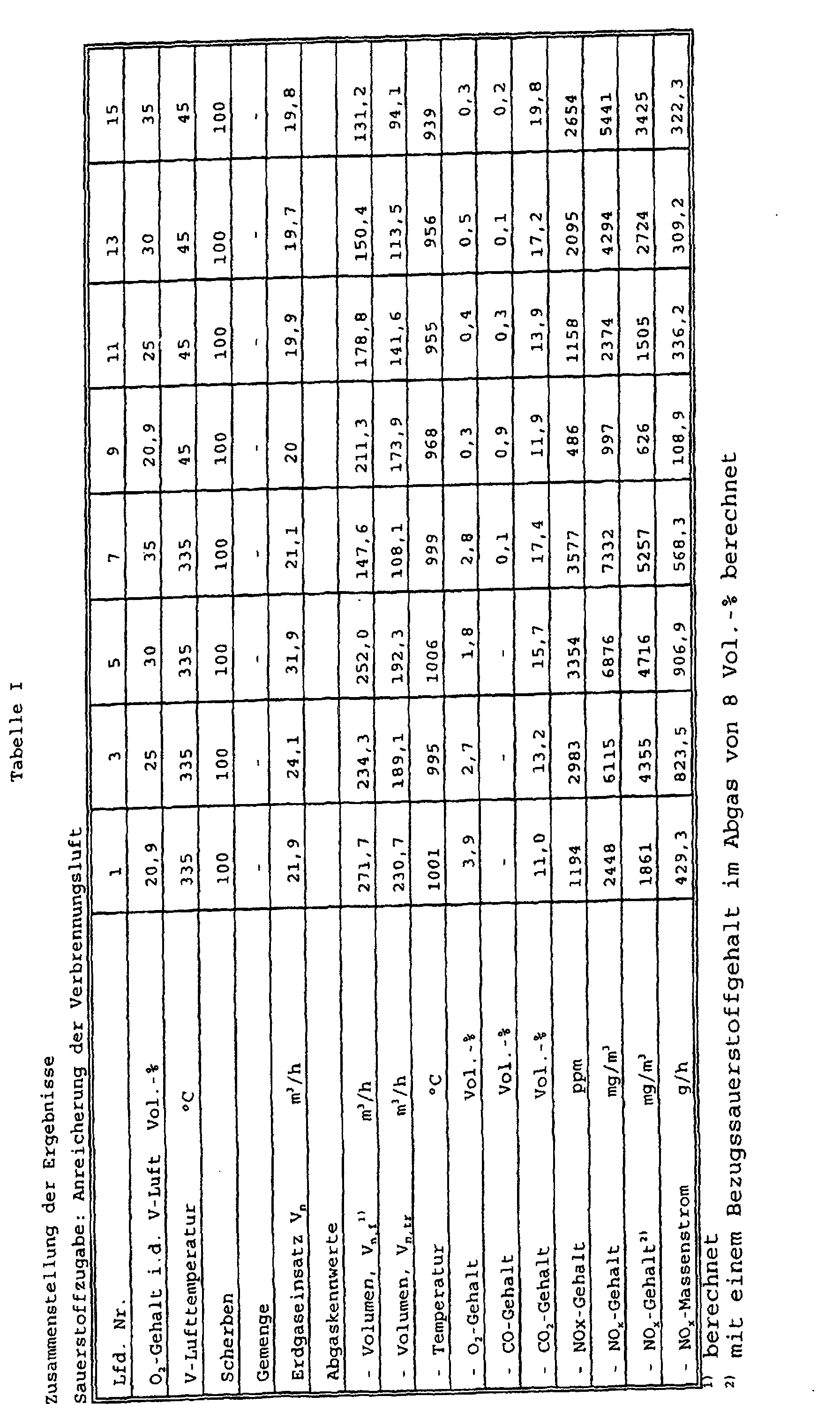

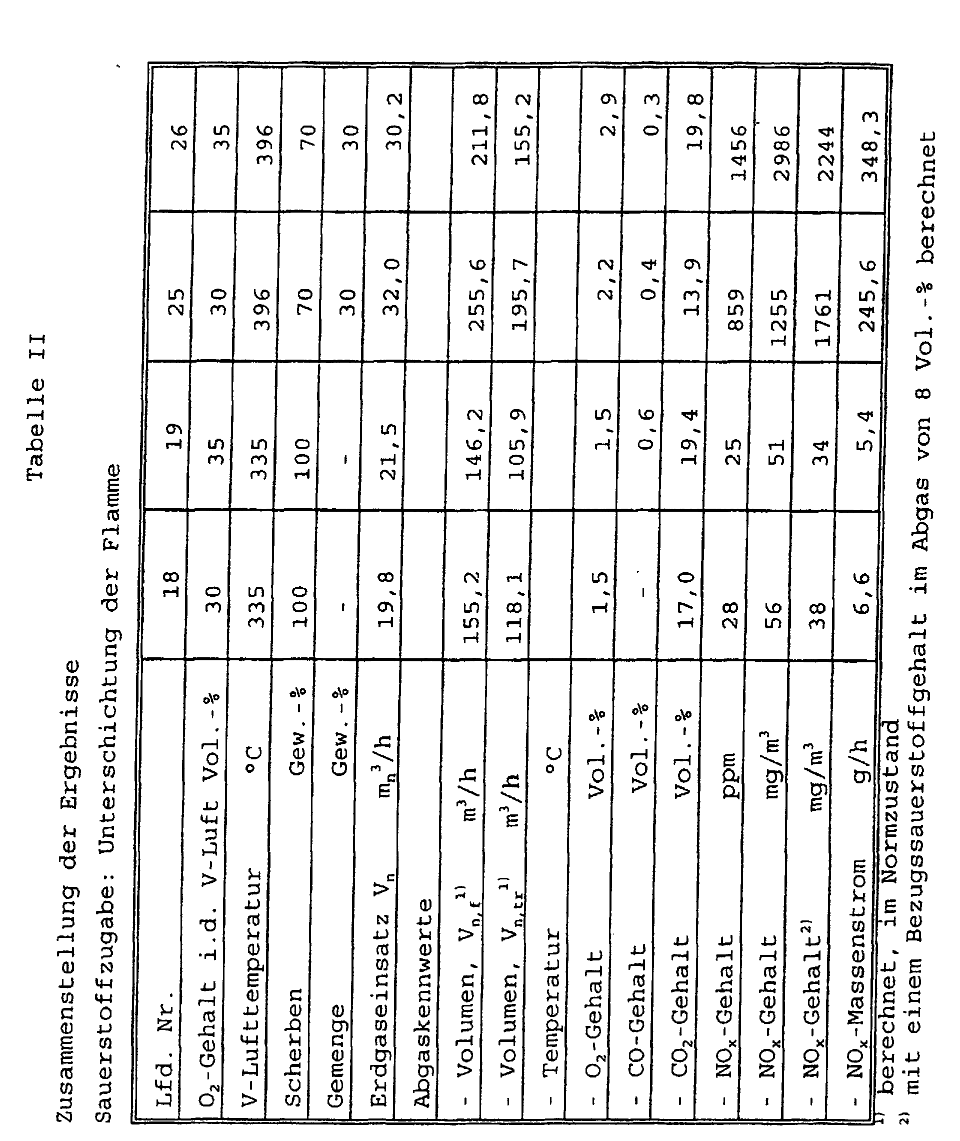

## Patentansprüche

1. Verfahren zur Reduzierung der Menge an freiwerdendem NO x in Schmelz- oder Brennöfen inbesondere zur Herstellung von Bleikristallglas, in denen die Oberfläche einer Glasschmelze mittels Gasbrennern, welche mit Heizgas, Luft und Sauerstoff betrieben werden, beheitz wird,
**dadurch gekennzeichnet,**
**dass** man dem Gasbrenner ein Gemisch aus Heizgas und Luft zuführt und den Sauerstoff separat unterhalb des Gasbrenners einbringt.

2. Verfahren nach Anspruch 1,
**dadurch gekennzeichnet,**
**dass** man die Luft auf eine Temperatur von 250 bis 450 °C vorwärmt vor der Vermischung mit dem Heizgas und der Zufuhr zum Gasbrenner.

3. Verfahren nach einem der Ansprüche 1 bis 2,
**dadurch gekennzeichnet,**
**dass** man Luft und Sauerstoff so zudosiert, dass ein Sauerstoffgehalt der Verbrennungsluft von 25 bis 40 % erhalten wird.

4. Verfahren nach Anspruch 1,
**dadurch gekennzeichnet,**
**dass** man der Glasschmelze an der Oberfläche Gemenge zusetzt, welches Nitrat enthält, und das Gemenge mit Hilfe des Gasbrenners zumindest teilweise schmilzt.

## Claims

1. A process for reducing the quantity of Nox liberated in melting furnaces or kilns, in particular for manufacture of lead crystal glass, in which the surface of a glass melt is heated by means of gas burners which are operated with fuel gas, air and oxygen, **characterised in that** a mixture of fuel gas and air is fed to the gas burner and the oxygen is introduced separately below the gas burner.

2. A process according to Claim 1, **characterised in that** the air is preheated to a temperature of 250 to 450°C before being mixed with the fuel gas and being fed to the gas burner.

3. A process according to either one of Claims 1 and 2, **characterised in that** air and oxygen are so metered that an oxygen content of the combustion air of 25 to 40 % is obtained.

4. A process according to Claim 1, **characterised in that** batch containing nitrate is added to the glass melt on the surface and the batch is at least partly melted by means of the gas burner.

## Revendications

1. Procédé pour la réduction de la quantité de NOx se dégageant dans les fours de fusion et de cuisson, en particulier pour la préparation de verre en cristal au plomb, dans lesquels on chauffe les surfaces d'un bain de fusion de verre au moyen de brûleurs qui fonctionnent au gaz de chauffage, à l'air et à l'oxygène,
**caractérisé en ce que**,
l'on amène un mélange de gaz de chauffage et d'air au brûleur à gaz et l'on introduit l'oxygène séparément au-dessous du brûleur à gaz.

2. Procédé selon la revendication 1,
**caractérisé en ce que**,
l'on pré-chauffe l'air jusqu'à une température de 250 à 450°C avant le mélange avec le gaz de chauffage et l'amenée au brûleur à gaz.

3. Procédé selon l'une des revendications 1 à 2,
**caractérisé en ce que**,
l'on ajoute de façon dosée l'air et l'oxygène de telle sorte que la teneur en oxygène de l'air de combustion soit de 25 à 40%.

4. Procédé selon la revendication 1,
**caractérisé en ce qu'**on ajoute un mélange qui contient du nitrate à la surface du bain de fusion de verre, ledit mélange fusionnant au moins partiellement à l'aide du brûleur à gaz.
